# EUROPÄISCHE PATENTANMELDUNG

(11) **EP 0 953 425 A1**
(43) Veröffentlichungstag der Anmeldung: **03.11.1999**
(21) Anmeldenummer: 98810369.3
(22) Anmeldetag: 27.04.1998
(51) Int. Cl.: B29C 45/73, B29C 35/02, B29C 33/04

(54) **Verfahren und Einrichtung zum Temperieren von Gussformen**

(71) Anmelder: Regloplas AG, 9006 St. Gallen (CH)
(72) Erfinder: Kaa, Johann, 92272 Etsdorf (DE)
(74) Vertreter: Kulhavy, Sava, Dipl.-Ing.

(57) **Zusammenfassung**

Die Einrichtung weist einen Primärkreislauf (I) und einen Sekundärkreislauf (II) auf. Im Primärkreislauf (I) ist neben einem Verbraucher (2) unter anderem auch ein erster Wärmetauscher (1) geschaltet. Dieser Wärmetauscher (1) hat einen Behälter (5), an welchen die Leitung (4) sowohl des Primärkreislaufes (I) als auch die Leitung (10) des Sekundärkreilaufes (II) angeschlossen ist. In der Leitung (10) des Sekundärkreislaufes (II) ist eine Kühlvorrichtung (17) geschaltet, welche über eine Pumpe (19) an den Primärkreislauf angeschlossen ist. Diese Pumpe (19) kann den Wärmeaustausch zwischen dem Wärmeträger im Primärkreislauf (I) und dem Kühlmittel im Sekundärkreislauf (II) unterbrechen.

## Beschreibung

Die vorliegende Patentanmeldung betrifft ein Verfahren zum Temperieren von Verbrauchern, insbesondere von Spritzgiess- und Drugussformen, in welchem ein Wärmeträger in einem Umlaufkreis umgewälzt wird, wobei der Verbraucher und ein Wärmetauscher im genannten Umlaufkreis geschaltet sind, sowie eine Einrichtung zur Durchführung dieses Verfahrens.

Solche Verfahren und Einrichtungen sind bereits bekannt. Eine dieser Einrichtungen ist in der DE-Zeitschrift "Giesserei" 60, 1973, Heft 25, S. 794 bis 799 beschrieben und sie eignet sich insbesondere zum Temperieren von Spritz- und Gussformen.

Diese Einrichtung weist einen Behälter auf, welcher in einem Kreislauf mit einem Verbraucher und einer Pumpe geschaltet ist. In diesem Kreislauf wird ein Wärmeträger umgewälzt. Im Behälter befindet sich unter anderem auch eine Kühlvorrichtung, welche die Form einer Schlange hat. Diese Schlange ist an das Betriebskühlnetz angeschlossen.

Als nachteilig gilt bei dieser bekannten Einrichtung unter anderem, dass das Kühlmedium aus dem Betriebskühlnetz nach Beendigung eines Kühlvorganges in der Kühlvorrichtung und somit auch im genannten Behälter verbleibt. Dieser Anteil des Kühlmediums kann sich dabei bis auf die Temperatur des Wärmeträgers erhitzen und verdampfen. Dabei schlagen sich die in diesem gelösten Stoffe, insbesondere mineralische Bestandteile und Schmutzpartikel in den Windungen der Kühlvorrichtung nieder. Durch eine solche Ablagerung wird der Querschnitt der Kühlvorrichtung vermindert, bis eine Abkühlung nicht mehr möglich ist.

Die Aufgabe der vorliegenden Erfindung ist, den genannten Nachteil sowie noch weitere Nachteile des Standes der Technik zu beseitigen.

Dies Aufgabe wird beim Verfahren der eingangs genannten Gattung erfindungsgemäss so gelöst, wie dies im kennzeichenden Teil des Patentanspruchs 1 definiert ist.

Diese Aufgabe wird auch durch eine Einrichtung gelöst, welche im Patentanspruch 4 definiert ist.

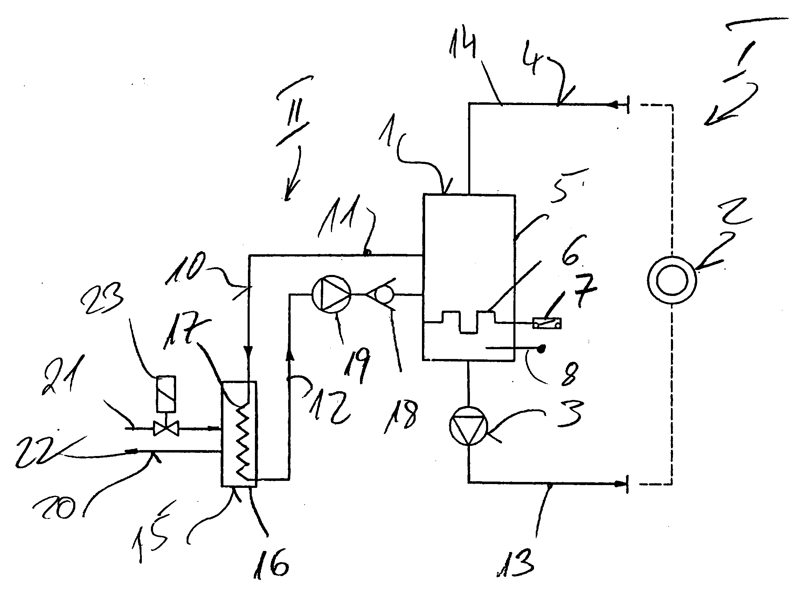

Nachstehend werden Ausführungsformen der vorliegenden Erfindung anhand der beiliegenden Zeichnung näher erläutert. Diese Zeichnung zeigt ein Blockschaltschema der vorliegenden Einrichtung.

Die vorliegende Einrichtung weist einen Primärkreislauf I und einen Sekundärkreislauf II auf. Im Primärkreislauf I sind ein erster Wärmetauscher 1, ein Verbraucher 2 und eine Pumpe 3 in einer Umwälzleitung 4 hintereinander geschaltet. Der Verbraucher 2 kann beispielsweise eine Spritzgiess- oder eine Druckgussform sein. Der erste Wärmetauscher 1 weist einen Behälter bzw. Druckbehälter 5 auf, an welchen die Enden der Umwälzleitung 4 fluiddicht angeschlossen sind. Im Inneren des Behälters 5 befindet sich ein Heizkörper 6, welcher über eine Steuervorrichtung (nicht dargestellt) an das elektrische Speisenetz anschliessbar ist. Zwischen dem Heizkörper 6 und der Steuervorrichtung ist ein Sicherheitsthermostat 7 geschaltet. Die vorliegende Einrichtung weist auch einen Wärmefühler 8 auf. Dieser Fühler bzw. Detektor 8 kann ein Thermometer sein, welches im dargestellten Fall dem ersten Wärmetauscher 1 zugeordnet ist. Je nach der Art der gewünschten Steuerung der vorliegenden Einrichtung kann der Detektor 8 oder können sogar mehrere Dektoren 8 zumindest einem der Abschnitte 13 bzw. 14 der ersten Umwälzleitung 4 zugeordnet sein.

In diesem Primärkreislauf I zirkuliert ein Wärmeträger, welcher eine Flüssigkeit, beispielsweise Wasser sein kann. Der Primärkreislauf I kann auch als Temperierkreislauf für den Verbraucher 2 bezeichnet werden, weil der Wärmeträger den Verbraucher 2 erwärmen oder abkühlen kann.

Der Sekundärkreislauf II weist ebenfalls eine Umwälzleitung 10 auf, welche zwei Abschnitte bzw. Aeste 11 und 12 umfasst. Der Sekundärkreislauf II weist ferner einen zweiten Wärmetauscher 15 auf, welcher einen Behälter 16 umfasst. Im Inneren des Behälters 16 ist eine Kühlvorrichtung 17 angeordnet, welche als eine Kühlschlange ausgeführt sein kann. Der erste Ast 11 der zweiten Umwälzleitung 10 ist einerends an den Behälter 5 des ersten Wärmetauschers 1 fluidmässig bzw. fluiddicht angeschlossen. Die andere Endpartie dieses ersten Leitungsastes 11 geht durch die Wand des Behälters 16 des zweiten Wärmetauschers 15 fluiddicht hindurch. Dieses Ende des ersten Leitungsastes 11 ist an das eine Ende der Kühlvorrichtung 17 fluidmässig angeschlossen.

Der zweite Ast bzw Abschnitt 12 der zweiten Umwälzleitung 10 ist einerends ebenfalls an den Behälter 5 des ersten Wärmetauschers 1 fluidmässig bzw. fluiddicht angeschlossen. In diesem Leitungsast 12 sind ein Rückschlagventil 18 und eine zweite Pumpe 19 hintereinander geschaltet. Das Rückschlagventil 18 ist zwischen dem ersten Wärmetauscher 1 und der zweiten Pumpe 19 angeordnet. Die andere Endpartie des zweiten Leitungsastes 12 geht fluiddicht durch die Wand des Behälters 16 des zweiten Wärmetauschers 15 hindurch und dieses Ende des zweiten Leitungsastes 12 ist an die gegenüberliegende Seite bzw. an das gegenüberliegende Ende der Kühlvorrichtung 17 fluidmässig bzw. fluiddicht angeschlossen.

Es ist ein Betriebskühlnetz 20 vorgesehen, von welchem in der Zeichnung nur Abschnitte von zwei Aesten 21 und 22 der betreffenden Leitung dargestellt sind. Der jeweilige Leitungsast 21 bzw. 22 ist einerends an den Behälter 16 des zweiten Wärmetauschers 15 fluidmässig angeschlossen. Im Zuführast 21 der Kühlnetzleitung 20 ist ein Ventil, zweckmässigerweise ein Magnetventil 23 ein- bzw. zwischengeschaltet, welches durch die bereits erwähnte Steuervorrichtung ebenfalls betätigbar ist.

Der Sekundärkreislauf II verbindet das Betriebskühlnetzt 20 mit dem Primärkreislauf I fluid- und -wärmemässig. Im Betriebskühlnetz 20 kann beispielsweise Wasser als Kühlflüssigkeit dienen. Die Kühlflüssigkeit füllt unter anderem auch das Innere des Behälters 16 des zweiten Wärmetauschers 15 aus, sodass sie die Kühlvorrichtung 17 umgibt und berührt, welche sich in diesem Behälter 16 befindet.

Der Verbraucher 2 kann während seines Betriebes Wärme an den Wärmeträger im Primärkreislauf I abgeben. Die erste Umwälzpumpe 3, welche ständig im Betrieb ist, transportiert den erhitzten Wärmeträger durch den ersten Abschnitt 13 der ersten Umwälzleitung 4 zum ersten Wärmetauscher 1. Die Erhöhung der Temperatur des Wärmeträgers wird durch den bereits genannten Detektor 8 detektiert und an die Steuervorrichtung gemeldet. Wenn die Temperatur des Wärmeträgers einen vorgegebenen Wert übersteigt, dann setzt die Steuervorrichtung die zweite Umwälzpumpen 19 in Betrieb und sie öffnet ausserdem das Magnetventil 23 im ersten Leitungsabschnitt 21 des Betriebskühlnetzes 20.

Dank der vorstehend beschriebenen Ausbildung des Behälters 5 des ersten Wärmetauschers 1 und dank der laufenden zweiten Pumpe 19 wird ein Teil des Wärmeträgers im Primärkreislauf I durch den ersten Abschnitt 11 der zweiten Umwälzleitung 10 dem ersten Wärmetauscher 1 entnommen. Dieser Anteil des Wärmeträgers wird der Kühlvorrichtung 17 im Sekundärkreislauf II zugeführt. In dieser Kühlvorrichtung 17 wird diese abgezweigte Menge des Wärmeträgers durch die Kühlflüssigkeit aus dem Betriebskühlnetz 20 abgekühlt. Die in der Kühlvorrichtung 17 abgekühlte Wärmeträgermenge kann nach der genannten Abkühlung auch als Kühlmittel bezeichnet werden.

Die zweite Pumpe 19 befördert das Kühlmittel aus der Kühlvorrichung 17 durch den zweiten Abschnitt 12 der zweiten Umwälzleitung 10 zum ersten Wärmetauscher 1. Dabei fliesst das Kühlmittel auch durch das Rückschlagventil 18. Im Inneren des Gehäuses 5 des ersten Wärmetauschers 1 vermischt sich das Kühlmittel mit dem in diesem Wärmetauscher 1 vorhandenen Anteil am Wärmeträger im Primärkreislauf I. Durch dieses Vermischen erfolgt eine Abkühlung des Wärmeträgers im ersten Wärmetauscher 1. Da die erste Pumpe 3 den Wärmeträger im Primärkreislauf I ständig umwälzt, gelangt der abgekühlte Anteil am Wärmeträger aus dem ersten Wärmetauscher 1 durch den zweiten Abschnitt 14 der ersten Umwälzleitung 4 zum Verbraucher 2, welcher dadurch abgekühlt wird.

Da die erste Pumpe 3 im Primärkreislauf I ständig in Betrieb ist, werden weitere Anteile des durch den Verbraucher 2 erwärmten Wärmeträgers in den ersten Wärmetauscher 1 befördert, wo sie in der beschriebenen Weise abgekühlt werden. Der abgekühlte Wärmeträger wird vom ersten Wärmetauscher 1 zum Verbraucher 2 so lange geführt, bis der Verbraucher 2 auf eine gewünschte Temperatur abgekühlt wird. Die momentane Temperatur des Verbrauchers 2 wird im dargestellten Fall in der Weise festgestellt, dass das Thermometer 8 die Temperatur des in den ersten Wärmetauscher 1 geführten Wärmeträgers misst. Nachdem die Temperatur des Verbrauchers 2 auf den gewünschten Wert absank, wird der Betrieb der zweite Pumpe 19 durch die Steuervorrichtung unterbrochen und das Magnetventil 23 im Betriebskühlnetz 20 wird ebenfalls durch die Steuervorrichtung geschlossen.

Die Zirkulation des Wäremträgers bzw. des Kühlmittels im Sekundärkreislauf II wird vor allem durch die zweite Umwälzpumpe 19 bewirkt. Wenn die zweite Pumpe 19 still steht, dann wird kein Kühlmittel aus dem zweiten Wärmetauscher 15 in den ersten Wärmetauscher 1 befördert. Foglich kann auch keine Vermischung zwischen dem Kühlmittel aus dem Sekundärkreislauf II mit dem Wärmeträger im Primärkreislauf I mehr erfolgen. Das Rückschlagventil 18 ist im zweiten Abschnitt 12 der zweiten Umwälzleitung 10 des Sekundärkreislaufs II so orientiert, dass das Kühlmittel bzw. der Wärmeträger vom ersten Wärmetauscher 1 zum zweiten Wärmetauscher 15 durch den zweiten Leitungsabschnitt 12 nicht fliessen kann.

Wenn der Wärmeträger im ersten Wärmetauscher 1 eine zwar hohe aber zulässige Temperatur aufweist, dann hat dies keinen negativen Einfluss auf jenen Anteil des Kühlmittels, welcher sich in der Kühlvorrichtung 17 befindet. Dies erstens deswegen, weil die still stehende zweite Pumpe 19 und das Rückschlagventil 18 einen Fluss des Kühlmittels zwischen dem ersten Wärmetauscher 1 und dem zweiten Wärmetauscher 15 verhindern. Folglich kann sich das Kühlmittel in der Kühlvorrichtung 17 auf diesem Weg nicht erwärmen. Ferner ist jener Anteil am Kühlmittel, welcher sich in der Kühlvorrichtung 17 befindet, von der im Behälter 16 des zweiten Wärmetauschers 15 befindlichen Kühlflüssigkeit aus dem Betriebskühlnetz 20 umgeben. Diese Kühlflüssigkeit hält das Kühlmittel in der Kühlvorrichtung 17 praktisch auf der Temperatur der Kühlflüssigkeit im Betriebskühlnetz 20.

Aus diesen Gründen kann es bei der vorliegenen Einrichtung nicht vorkommen, dass das Kühlmittel in der Kühlvorrichtung 17 verdampft. Folglich können sich keine Ablagerungen in der Kühlvorrichtung 17 bilden, welche durch das Verdampfen des Kühlmittels in der Kühlvorrichtung 17 entstehen und welche eine Verjüngung des Querschnittes der Kühlvorrichtung 17 verursachen könnten.

## Patentansprüche

1. Verfahren zum Temperieren von Verbrauchern, insbesondere von Spritzgiess- und Druckgussformen, in welchem ein Wärmeträger in einem Kreislauf (I) umgewälzt wird, wobei der Verbraucher (2) und ein Wärmetauscher (1) in diesem Kreislauf geschaltet sind, dadurch gekennzeichnet, dass ein Teil des Wärmeträgers aus dem Kreislauf (I) abgezweigt und behandelt wird und dass dieser Teil des Wärmeträgers mit dem übrigen Wärmeträger vermischt wird.

2. Verfahren nach Patentanspruch 1, dadurch gekennzeichnet, dass der abgezweigte Teil des Wärmeträgers abgekühlt wird und dass der abgekühlte Wärmeträgerteil dem übrigen Wärmeträger so lange zugeführt und mit diesem vermischt wird, bis die Temperatur des Wärmeträgers im Kreislauf (I) auf den gewünschten Wert abgesenkt wird.

3. Verfahren nach Patentanspruch 1, dadurch gekennzeichnet, dass der abgezweigte Teil des Wärmeträgers ausserhalb des Wär-metauschers (1) und durch Wärmekonvektion mit Hilfe einer Kühlflüssigkeit gekühlt wird.

4. Einrichtung zur Durchführung des Verfahrens nach Patentanspruch 1, dadurch gekennzeichnet, dass ein Sekundärkreislauf (II) vorgesehen ist, in welchen ein Teil des Wärmeträgers abgezweigt werden kann, und dass dieser Sekundärkreislauf (II) so ausgeführt ist, dass der abgezweigte Teil des Wärmeträgers in diesem Sekundärkreislauf (II) behandelt werden kann.

5. Einrichtung nach Patentanspruch 4, dadurch gekennzeichnet, dass der Sekundärkreislauf (II) eine Umwälzleitung (10) sowie eine Vorrichtung (17) zum Abkühlen des abgezweigten Teiles des Wärmeträgers aufweist, dass diese Kühlvorrichtung (17) über Abschnitte (11,12) der Umwälzleitung (10) an den Wärmetauscher (1) im Primärkreislauf (I) angeschlossen ist und dass im Sekundärkreislauf (II) ferner Mittel (18,19) vorhanden sind, welche den Fluss des abgezweigten Teiles des Wärmeträgers durch den Sekundärkreislauf (II) verhindern bzw. unterbrechen können.

6. Einrichtung nach Patentanspruch 5, dadurch gekennzeichnet, dass ein zweiter Wärmetauscher (15) im Sekundärkreislauf (II) geschaltet ist, dass dieser Wärmetauscher (15) ein Gehäuse (16) aufweist, dass dieses Gehäuse (16) an ein Betriebskühlnetz (20) angeschlossen ist, dass die Kühlvorrichtung (17) im Gehäuse (16) des zweiten Wärmetauschers (15) untergebracht ist und dass die Abschnitte (11,12) der Umwälzleitung (10), über welche die Kühlvorrichtung (17) an den ersten Wärmetauscher (1) angeschlossen ist, durch die Wand des Gehäuses (16) hindurchgehen.

7. Einrichtung nach Patentanspruch 6, dadurch gekennzeichnet, dass ein Magnetventil (23) in einem der Leitungsabschnitte (21) des Betriebskühlnetzes (20) geschaltet ist.

8. Einrichtung nach Patentanspruch 5, dadurch gekennzeichnet, dass die Mittel zur Verhinderung des Flusses des Wärmeträgers durch den Sekundärkreislauf (II) eine Pumpe (19) umfassen, dass diese Pumpe (19) zwischen dem ersten Wärmetauscher (1) und der Kühlvorrichtung (17) angeordnet ist, und dass die Pumpe (19) in jenem Abschnitt (12) der Umwälzleitung (10) im Sekundärkreislauf (II) geschaltet sein kann, durch welchen der abgekühlte Teil des Wärmeträgers zum ersten Wärmetauscher (1) geführt wird.

9. Einrichtung nach Patentanspruch 5, dadurch gekennzeichnet, dass die Mittel zur Verhinderung bzw. zur Unterbrechung des Flusses des Wärmeträgers durch den Sekundärkreislauf (II) ferner ein Rückschlagventil (18) umfassen, welches im Sekundärkreislauf (II) ebenfalls geschaltet ist und dass dieses Rückschlagventil (18) so orientiert ist, dass es den Fluss des Kühlmittels aus dem ersten Wärmetauscher (1) in die Kühlvorrichtung (17) verhindert.

10. Einrichtung nach Patentanspruch 9, dadurch gekennzeichnet, dass das Rückschlagventil (18) zwischen der Pumpe (19) und dem ersten Wärmetauscher (1) angeordnet ist.
